(19) Europäisches Patentamt / European Patent Office / Office européen des brevets

(11) **EP 4 340 093 A1**

(12) **EUROPEAN PATENT APPLICATION**
published in accordance with Art. 153(4) EPC

(43) Date of publication:
**20.03.2024 Bulletin 2024/12**

(21) Application number: **22807511.5**

(22) Date of filing: **11.05.2022**

(51) International Patent Classification (IPC):
$H01M\ 10/0567$ (2010.01)    $H01M\ 10/054$ (2010.01)
$H01M\ 10/0568$ (2010.01)    $H01M\ 10/0569$ (2010.01)
$H01M\ 10/058$ (2010.01)

(52) Cooperative Patent Classification (CPC):
H01M 10/054; H01M 10/0567; H01M 10/0568;
H01M 10/0569; H01M 10/058; Y02E 60/10

(86) International application number:
**PCT/JP2022/019973**

(87) International publication number:
**WO 2022/239812 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2021 JP 2021082005**

(71) Applicant: **Central Glass Co., Ltd.**
**Yamaguchi 755-0001 (JP)**

(72) Inventors:
• **KAWAHARA, Kei**
**Ube-shi, Yamaguchi 755-0001 (JP)**
• **SHIMIZU, Genki**
**Ube-shi, Yamaguchi 755-0001 (JP)**
• **MORINAKA, Takayoshi**
**Ube-shi, Yamaguchi 755-0001 (JP)**

(74) Representative: **Mewburn Ellis LLP**
**Aurora Building**
**Counterslip**
**Bristol BS1 6BX (GB)**

(54) **ELECTROLYTE FOR NON-AQUEOUS SODIUM ION BATTERY, NON-AQUEOUS SODIUM ION BATTERY, AND METHOD FOR PRODUCING SAME**

(57) The present disclosure provides: an electrolyte solution for a nonaqueous sodium ion battery including (I) a nonaqueous solvent, (II) a sodium salt, and (III) a fluorosulfate, in which the electrolyte solution includes the (III) in an amount of 0.05 mass% to 10.00 mass% with respect to the total amount of the electrolyte solution for a nonaqueous sodium ion battery, and the electrolyte solution includes a chain carbonate in an amount of 0 mass% to 70 mass% with respect to the total amount of the (I); a nonaqueous sodium ion battery including at least a positive electrode, a negative electrode, and the electrolyte solution for a nonaqueous sodium ion battery; and a method for producing the nonaqueous sodium ion battery.

**FIGURE**

**Description**

TECHNICAL FIELD

One embodiment of the present disclosure relates to an electrolyte solution for a nonaqueous sodium ion battery, a nonaqueous sodium ion battery using the same, and a method for producing the same.

BACKGROUND ART

In recent years, lithium ion batteries are attracting attention as power storage systems for information-related devices and communication devices, that is, power storage systems for compact and high-energy-density applications such as personal computers, video cameras, digital still cameras, and mobile phones and power storage systems for large-scale power applications such as electric vehicles, hybrid vehicles, auxiliary power sources for fuel cell vehicles, and power storage. On the other hand, a price of lithium has increased, and a sodium ion battery, which is less expensive, has attracted attention as a next generation secondary battery (Patent Literature 1).

In general, in a nonaqueous sodium ion battery, a nonaqueous electrolyte solution or a nonaqueous electrolyte solution that is pseudo-solidified by a gelling agent is used as an ionic conductor. In this configuration, an aprotic solvent is used as a solvent, and a sodium salt is used as a solute.

Various additives for nonaqueous electrolyte solutions have been studied for improving performance in the nonaqueous sodium ion battery. Patent Literature 1 discloses that use of fluoroethylene carbonate as an additive improves a charge-discharge cycle characteristic. Further, Patent Literatures 2 and 3 disclose that use of a sulfonic acid ester compound or a cyclic sulfuric acid ester as an additive achieves an effect of improving a cycle characteristic or preventing an increase in resistance.

In relation to a nonaqueous lithium ion battery, Patent Literature 4 discloses that when the addition of a fluorosulfate to an electrolyte solution for nonaqueous lithium ion battery improves high-temperature durability and an output characteristic.

CITATION LIST

PATENT LITERATURE

Patent Literature 1: JP2013-48077A
Patent Literature 2: JP2016-181467A
Patent Literature 3: JP2019-46614A
Patent Literature 4: WO2018/179884

SUMMARY OF INVENTION

TECHNICAL PROBLEM

A nonaqueous sodium ion battery has already started to put into practical use, but for example, the nonaqueous sodium ion battery has not reached sufficient practical use in terms of gas generation and a cycle characteristic for applications at a high temperature for a long period of time, such as automobiles. In particular, a major issue to be improved is a gas generation amount at a high temperature of 60°C or higher. On the other hand, in Patent Literature 4, no specific study has been made on an effect of adding the fluorosulfate in a sodium ion secondary battery, and the effect has not been clarified.

Accordingly, an object of the present disclosure is to provide an electrolyte solution for a nonaqueous sodium ion battery excellent in an effect of preventing gas generation at a high temperature of 60°C or higher when the electrolyte solution is used in the nonaqueous sodium ion battery, a nonaqueous sodium ion battery using the same, and a method for producing the same.

SOLUTION TO PROBLEM

As a result of intensive studies in view of such problems, the present inventors have found that an effect of preventing gas generation at a high temperature of 60°C or higher, which has not been found in a lithium ion secondary battery, is exhibited in a sodium ion secondary battery when the sodium ion secondary battery contains a predetermined amount of fluorosulfate and contains the limited amount or less of a chain carbonate in a nonaqueous solvent contained in a nonaqueous electrolyte solution.

That is, the present disclosure includes the following embodiments.

[1] An electrolyte solution for a nonaqueous sodium ion battery including:

(I) a nonaqueous solvent;
(II) a sodium salt; and
(III) a fluorosulfate, in which

the electrolyte solution comprises the (III) in an amount of 0.05 mass% to 10.00 mass% with respect to the total amount of the electrolyte solution for a nonaqueous sodium ion battery, and
the electrolyte solution comprises a chain carbonate in an amount of 0 mass% to 70 mass% with respect to the total amount of the (I).

[2] The electrolyte solution for a nonaqueous sodium ion battery according to [1], in which the electrolyte solution includes the (III) in an amount of 0.15 mass% to 8.00 mass% with respect to the total amount of the electrolyte solution for a nonaqueous sodium ion battery.

[3] The electrolyte solution for a nonaqueous sodium ion battery according to [1] or [2], in which the electrolyte solution includes a chain carbonate in an amount of 0 mass% to 65 mass% with respect to the total amount of the (I).

[4] The electrolyte solution for a nonaqueous sodium ion battery according to any one of [1] to [3], in which the electrolyte solution includes a chain carbonate in an amount of 0 mass% to 62 mass% with respect to the total amount of the (I).

[5] The electrolyte solution for a nonaqueous sodium ion battery according to any one of [1] to [4], in which a counter cation of the (III) is a lithium ion, a sodium ion, a potassium ion, a tetraalkylammonium ion, a tetraalkylphosphonium ion, or an ammonium ion having a spiro skeleton.

[6] The electrolyte solution for a nonaqueous sodium ion battery according to any one of [1] to [5], in which the (I) contains at least one selected from the group consisting of a cyclic ester, a chain ester other than the chain carbonate, a cyclic ether, and a chain ether.

[7] The electrolyte solution for a nonaqueous sodium ion battery according to [6], in which the (I) includes the cyclic ester, and the cyclic ester is a cyclic carbonate.

[8] The electrolyte solution for a nonaqueous sodium ion battery according to [6], in which the (I) contains at least one selected from the group consisting of ethylene carbonate, propylene carbonate, butylene carbonate, $\gamma$-butyrolactone, methyl acetate, ethyl acetate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.

[9] The electrolyte solution for a nonaqueous sodium ion battery according to any one of [1] to [8], in which the chain carbonate is at least one selected from the group consisting of dimethyl carbonate, diethyl carbonate, ethyl methyl carbonate, methyl propyl carbonate, methyl-2,2,2-trifluoroethyl carbonate, ethyl-2,2,2-trifluoroethyl carbonate, methyl-1,1,1,3,3,3-hexafluoroisopropyl carbonate, and ethyl-1,1,1,3,3,3-hexafluoroisopropyl carbonate.

[10] The electrolyte solution for a nonaqueous sodium ion battery according to any one of [1] to [9], in which the (II) is at least one selected from the group consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$ (in which a and b are integers satisfying $2 \leq a \leq 20$ and $2 \leq b \leq 20$), $NaSO_3CF_3$, $NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_4$, $NaCl$, and $NaI$.

[11] The electrolyte solution for a nonaqueous sodium ion battery according to any one of [1] to [10], in which the (II) contains $NaPF_6$.

[12] A nonaqueous sodium ion battery including at least a positive electrode, a negative electrode, and the electrolyte solution for a nonaqueous sodium ion battery according to any one of [1] to [11].

[13] A method for producing a nonaqueous sodium ion battery, including preparing the electrolyte solution for a nonaqueous sodium ion battery according to any one of [1] to [11], and filling an empty cell including at least a positive electrode and a negative electrode with the electrolyte solution for a nonaqueous sodium ion battery.

ADVANTAGEOUS EFFECTS OF INVENTION

An embodiment of the present disclosure allows for providing an electrolyte solution for a nonaqueous sodium ion battery excellent in an effect of preventing gas generation at a high temperature of 60°C or higher when the electrolyte solution is used in the nonaqueous sodium ion battery, a nonaqueous sodium ion battery using the same, and a method for producing the same.

BRIEF DESCRIPTION OF DRAWINGS

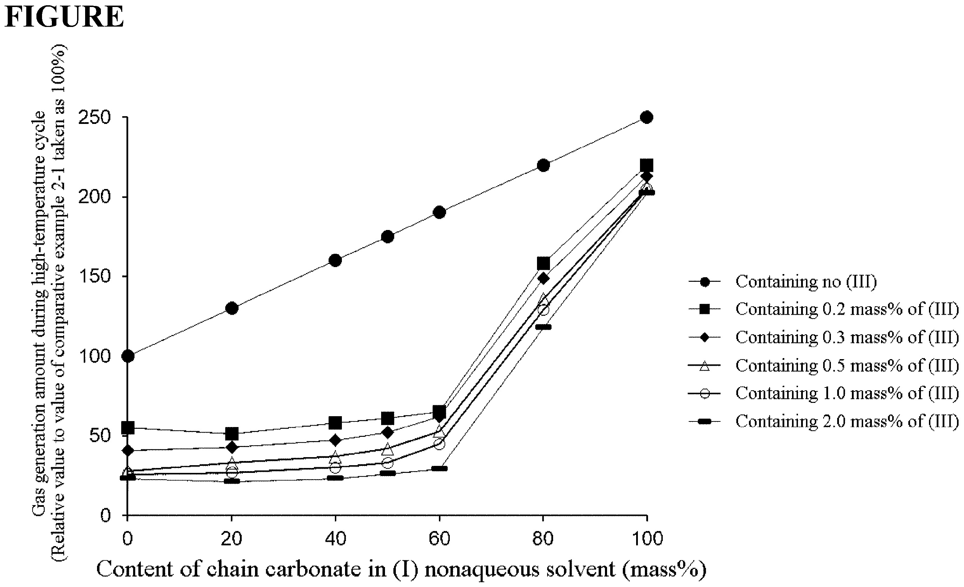

The FIGURE is a diagram showing a plot of a gas generation amount during a high-temperature cycle with respect to a content of a chain carbonate in (I) according to Examples and Comparative Examples in Table 5.

DESCRIPTION OF EMBODIMENTS

Hereinafter, each embodiment of the present disclosure will be described. However, the present disclosure can be implemented in various aspects without departing from the gist thereof, and should not be construed as being limited to the description of the embodiments or Examples illustrated below. In addition, among other actions and effects different from the actions and effects brought about by the following embodiments or the aspects of Examples, the actions and effects obvious from the description of the present specification or the actions and effects easily predicted by a person skilled in the art are construed as being brought about by the present disclosure.

Ranges expressed with "to" in the present specification mean ranges including numerical values indicated before and after "to" as a lower limit and an upper limit.

An electrolyte solution for a nonaqueous sodium ion battery according to one embodiment of the present disclosure includes

(I) a nonaqueous solvent (hereinafter sometimes referred to as a "component (I)" or simply "(I)");
(II) a sodium salt (hereinafter sometimes referred to as a "component (II)" or simply "(II)"); and
(III) a fluorosulfate (hereinafter sometimes referred to as a "component (III)" or simply "(III)"), and

the electrolyte solution contains the (III) in an amount of 0.05 mass% to 10.00 mass% with respect to the total amount of the electrolyte solution for a nonaqueous sodium ion battery, and the electrolyte solution contains a chain carbonate in an amount of 0 mass% to 70 mass% with respect to the total amount of the (I).
If necessary, other commonly known additives can be used in combination.

The electrolyte solution for a nonaqueous sodium ion battery according to the present embodiment having the above-described configuration can remarkably prevent gas generation at a high temperature of 60°C or higher. Although details of this mechanism are not clear, it is presumed that when the content of the chain carbonate with respect to the total amount of the nonaqueous solvent is limited to a predetermined amount or less, a film on an electrode formed by a solvent and a fluorosulfate anion in a predetermined amount of fluorosulfate becomes in an optimal state and this prevents subsequent decomposition of the solvent.

Hereinafter, each component of the electrolyte solution for a nonaqueous sodium ion battery according to the present embodiment will be described in detail.

[(I) Nonaqueous Solvent]

The electrolyte solution for a nonaqueous sodium ion battery according to the present embodiment contains the chain carbonate in an amount of 0 mass% to 70 mass% with respect to the total amount of the nonaqueous solvent (hereinafter sometimes referred to as a "solvent composition condition"). In other words, the electrolyte solution may or may not contain the chain carbonate in the nonaqueous solvent, but when the electrolyte solution contains the chain carbonate, the electrolyte solution contains the chain carbonate in an amount of 70 mass% or less. A type of the nonaqueous solvent is not limited as long as the above solvent composition condition is satisfied, and any nonaqueous solvent can be used. For example, a cyclic ester, a chain ester other than the chain carbonate, a cyclic ether, a chain ether, a sulfur-containing nonaqueous solvent, or the like may be used.

Examples of the cyclic ester include cyclic carbonates such as ethylene carbonate, propylene carbonate and butylene carbonate, γ-butyrolactone, and γ-valerolactone.

Examples of the chain ester other than the chain carbonate include methyl acetate, ethyl acetate, methyl propionate, and ethyl propionate.

Examples of the cyclic ether include tetrahydrofuran, 2-methyltetrahydrofuran, 1,3-dioxolane, 2-methyl-1,3-dioxolane, 4-methyl-1,3-dioxolane, and 1,3-dioxane.

Examples of the chain ether include dimethoxyethane, diethoxyethane, diethyl ether, ethoxy-methoxy ethane, diethylene glycol dimethyl ether, triethylene glycol dimethyl ether, tetraethylene glycol dimethyl ether, and dipropylene glycol dimethyl ether.

Examples of the sulfur-containing nonaqueous solvent include dimethyl sulfoxide and sulfolane.

Further, one type of these nonaqueous solvents for use in the present embodiment may be used alone, or two or more types may be mixed and used in any combination and any proportion according to an application.

As long as the above solvent composition condition is satisfied, the nonaqueous solvent of the electrolyte solution for a nonaqueous sodium ion battery according to the present embodiment may contain the chain carbonate.

Examples of the chain carbonate include chain carbonates such as dimethyl carbonate, diethyl carbonate, ethyl methyl carbonate, methyl propyl carbonate, methyl-2,2,2-trifluoroethyl carbonate, ethyl-2,2,2-trifluoroethyl carbonate, methyl-1,1,1,3,3,3-hexafluoroisopropyl carbonate, and ethyl-1,1,1,3,3,3-hexafluoroisopropyl carbonate.

From the viewpoint of an effect of preventing gas generation at a high temperature of 60°C or higher in the nonaqueous sodium ion battery, the electrolyte solution for a nonaqueous sodium ion battery preferably contains the chain carbonate in an lower amount as much as possible, and specifically preferably in an amount of 0 mass% to 65 mass%, more preferably in an amount of 0 mass% to 62 mass%, still more preferably in an amount of 0 mass% to 60 mass%, yet still more preferably in an amount of 0 mass% to 55 mass%, particularly preferably in an amount of 0 mass% to 30 mass%, and most preferably substantially free of the chain carbonate, with respect to the total amount of (I).

"Substantially free of the chain carbonate" means that the electrolyte solution for a nonaqueous sodium ion battery contains the chain carbonate in an amount of less than 1 mass% in the total amount of (I).

As described above, the electrolyte solution may or may not contain the chain carbonate in the nonaqueous solvent, but when the electrolyte solution contains the chain carbonate, the electrolyte solution contains the chain carbonate in an amount of 70 mass% or less.

In a preferable aspect, when the electrolyte solution contains the chain carbonate in the nonaqueous solvent, the electrolyte solution contains the chain carbonate in an amount of preferably more than 0 mass% to 65 mass%, more preferably more than 0 mass% to 62 mass%, still more preferably more than 0 mass% to 60 mass%, yet still more preferably more than 0 mass% to 55 mass%, and particularly preferably more than 0 mass% to 30 mass% with respect to the total amount of the (I).

In this case, the electrolyte solution contains the chain carbonate in an amount of preferably more than 0 mass%, more preferably 3 mass% or more, and still more preferably 5 mass% or more in the total amount of (I).

In a preferred embodiment, the electrolyte solution for a nonaqueous sodium ion battery contains, as the nonaqueous solvent, at least one selected from the group consisting of a cyclic ester, a chain ester other than the chain carbonate, a cyclic ether, and a chain ether.

In a preferred embodiment, the electrolyte solution for a nonaqueous sodium ion battery contains the cyclic ester as the nonaqueous solvent, and the cyclic ester is a cyclic carbonate.

More preferably, the electrolyte solution for a nonaqueous sodium ion battery contains, as (I), at least one selected from the group consisting of ethylene carbonate, propylene carbonate, butylene carbonate, γ-butyrolactone, methyl acetate, ethyl acetate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.

As described above, the (I) may or may not contain the chain carbonate.

Further, the chain carbonate is preferably at least one selected from dimethyl carbonate, diethyl carbonate, ethyl methyl carbonate, methyl propyl carbonate, methyl-2,2,2-trifluoroethyl carbonate, ethyl-2,2,2-trifluoroethyl carbonate, methyl-1,1,1,3,3,3-hexafluoroisopropyl carbonate, and ethyl-1,1,1,3,3,3-hexafluoroisopropyl carbonate.

[(II) Sodium Salt]

A type of sodium salt of the solute is not limited, and any sodium salt (excluding (III) fluorosulfate to be described later) can be used. Specific examples of the sodium salt include an electrolyte sodium salt represented by at least one selected from the group consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$, where a and b are integers satisfying $2 \leq a < 20$ and $2 \leq b \leq 20$, $NaSO_3CF_3$, $NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_4$, NaCl, and NaI. One type of these solutes may be used alone, or two or more types thereof may be mixed and used in any combination and any proportion according to an application.

Among them, in view of energy density, output characteristics, life and the like of the battery, $NaPF_6$, $NaBF_2(C_2O_4)$, $NaPF_4(C_2O_4)$, $NaPF_2(C_2O_4)_2$, $NaN(SO_2F)_2$, $NaN(SO_2CF_3)_2$, $NaN(SO_2C_2F_5)_2$, $NaN(POF_2)_2$, $NaN(POF_2)(SO_2F)$, and $NaPO_3F_2$ are preferred, $NaPF_6$ and $NaN(SO_2F)_2$ are more preferred, and $NaPF_6$ is even more preferred.

In a preferred embodiment, the electrolyte solution for a nonaqueous sodium ion battery contains $NaPF_6$ as the (II) sodium salt.

A concentration of (II) in the electrolyte solution for a nonaqueous sodium ion battery according to the present embodiment is not limited, but is preferably 0.3 mol/L or more, more preferably 0.4 mol/L or more, and still more preferably 0.8 mol/L or more, and is preferably 5.0 mol/L or less, more preferably 2.0 mol/L or less, and still more preferably 1.5 mol/L or less.

The (II) having the concentration to 0.3 mol/L or more allows for easily preventing deterioration of a cycle characteristic of the nonaqueous sodium ion battery due to a decrease in ionic conductivity. The (II) having the concentration to 5.0 mol/L or less allows for easily preventing an increase in viscosity of the electrolyte solution for a nonaqueous sodium ion battery and a decrease in battery characteristic due to the decrease in ionic conductivity in accordance with the increase in viscosity.

[(III) Fluorosulfate]

The electrolyte solution for a nonaqueous sodium ion battery according to the present embodiment contains the fluorosulfate in an amount of 0.05 mass% to 10.00 mass% with respect to the total amount of the electrolyte solution.

When the above range of the concentration has a saturated concentration of the fluorosulfate, from the viewpoint of preventing generation of an excessive insoluble component in the electrolyte solution, an upper limit of the range of the concentration is preferably the saturated concentration of the fluorosulfate. The above saturated concentration is a saturated concentration at 25°C and 1 atm (= 0.10132 MPa).

The fluorosulfate is an ionic salt having an anion represented by $SO_3F^-$ and a counter cation.

As the counter cation of the fluorosulfate, various counter cations can be selected without any limitation on a type of counter cation, as long as the counter cation does not impair performance of the electrolyte solution for a nonaqueous sodium ion battery and the nonaqueous sodium ion battery according to the present embodiment.

Specific examples of the counter cation include metal cations such as lithium ions, sodium ions, potassium ions, rubidium ions, cesium ions, magnesium ions, calcium ions, barium ions, silver ions, copper ions, and iron ions; and onium cations such as tetraalkylammonium ions, tetraalkylphosphonium ions, imidazolium ions, and ammonium ions having a spiro skeleton. In particular, from a viewpoint of helping ionic conduction in the nonaqueous sodium ion battery, lithium ions, sodium ions, potassium ions, tetraalkylammonium ions, tetraalkylphosphonium ions, or ammonium ions having a spiro skeleton are preferred, and lithium ions, sodium ions, tetraalkylammonium ions, or ammonium ions having a spiro skeleton are more preferred.

An alkyl group in the tetraalkylammonium ion preferably has 1 to 6 carbon atoms, and an alkyl group in the tetraalkylphosphonium ion preferably has 1 to 6 carbon atoms.

Four alkyl groups in the tetraalkylammonium ion may be the same or different from one another, and four alkyl groups in the tetraalkylphosphonium ion may be the same or different from one another.

The ammonium ion having a spiro skeleton is preferably, for example, 5-azoniaspiro[4.4]nonane.

The fluorosulfate is not limited, but is preferably $NaSO_3F$, $LiSO_3F$, $TEMASO_3F$, $SBPSO_3F$, or $TEASO_3F$, particularly preferably $NaSO_3F$, $LiSO_3F$, or $TEASO_3F$. Here, TEMA represents triethyl methyl ammonium, SBP represents 5-azoniaspiro[4.4]nonane, and TEA represents tetraethylammonium.

A lower limit of a content of the fluorosulfate is 0.05 mass% with respect to the total amount of the electrolyte solution for a nonaqueous sodium ion battery, and from the viewpoint of the effect of preventing the gas generation at the high temperature of 60°C or higher, the content is preferably 0.15 mass% or more, more preferably 0.20 mass% or more, still more preferably 0.25 mass% or more, and particularly preferably 0.75 mass% or more. Further, an upper limit of the content of the fluorosulfate is 10.00 mass% or less with respect to the total amount of the electrolyte solution for a nonaqueous sodium ion battery, and from the viewpoint of the effect of preventing the gas generation at the high temperature of 60°C or higher, the content is preferably 8.00 mass% or less, more preferably 7.00 mass% or less, still more preferably 6.50 mass% or less, and particularly preferably 5.50 mass% or less. When the content of the fluorosulfate is 0.05 mass% or more, the gas generation at the high temperature of 60°C or higher of the nonaqueous sodium ion battery can be prevented. When the content of the fluorosulfate is 10.00 mass% or less, the film formed on the electrode does not become too thick, a decrease in ionic conductivity due to an increase in viscosity of the electrolyte solution can be prevented, and corrosion of a constituent member (metal member) of the battery due to the fluorosulfate can be further prevented. Therefore, this is less likely to lead to an increase in resistance and charge-discharge cycle deterioration.

Further, from the viewpoint of the effect of improving a high-temperature cycle characteristic, the lower limit of the content of the fluorosulfate is preferably 0.17 mass% or more, more preferably 0.40 mass% or more, and still more preferably 0.90 mass% or more with respect to the total amount of the electrolyte solution for a nonaqueous sodium ion battery.

One type of the fluorosulfates may be used alone, or two or more types thereof may be mixed and used in any combination and any proportion according to an application.

In one embodiment, the content of the fluorosulfate is preferably 0.15 mass% to 8.00 mass%, more preferably 0.20 mass% to 7.00 mass%, still more preferably 0.25 mass% to 6.50 mass%, and particularly preferably 0.75 mass% to 5.50 mass%, with respect to the total amount of the electrolyte solution for a nonaqueous sodium ion battery.

[Other Additives]

The electrolyte solution for a nonaqueous sodium ion battery according to the present embodiment may contain other additives generally used in the electrolyte solution for a nonaqueous sodium ion battery in any proportion without departing from the gist of the present invention. Specific examples of other additives include compounds having an overcharge prevention effect, a negative electrode film-forming effect, and a positive electrode protective effect, such as cyclohexylbenzene, biphenyl, t-butyl benzene, t-amyl benzene, fluorobenzene, vinylene carbonate, vinylene carbonate oligomers (a number average molecular weight is 170 to 5,000. Here, the number average molecular weight is a number average molecular weight in terms of standard polystyrene measured by gel permeation chromatography (GPC) using tetrahydrofuran (THF) as a solvent. The same applies hereinafter.), vinyl ethylene carbonate, difluoroanisole, fluoroethylene carbonate, 1,6-diisocyanatohexane, ethynylethylene carbonate, trans-difluoroethylene carbonate, propane sultone, propene sultone, dimethylvinylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane.

Among them, at least one compound selected from the group consisting of cyclohexylbenzene, t-butyl benzene, t-amyl benzene, fluorobenzene, vinylene carbonate, vinylene carbonate oligomers (a number average molecular weight is 170 to 5,000), vinyl ethylene carbonate, fluoroethylene carbonate, 1,6-diisocyanatohexane, ethynylethylene carbonate, trans-difluoroethylene carbonate, propane sultone, propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane is preferred, and vinylene carbonate, fluoroethylene carbonate, 1,3,2-dioxathiolane-2,2-dioxide, or tris(trimethylsilyl)borate is more preferred.

When the electrolyte solution for a nonaqueous sodium ion battery according to the present embodiment contains the other additives, the electrolyte solution for a nonaqueous sodium ion battery contains the other additives in an amount of preferably 0.01 mass% or more and 10.00 mass% or less with respect to the total amount of the electrolyte solution.

The above sodium salt (a sodium salt other than the sodium salt used as the solute (excluding those corresponding to the component (III))) can also be used as another additive.

When the sodium salt is used as the other additive, the electrolyte solution for a nonaqueous sodium ion battery contains the other additives in an amount of preferably 0.20 mass% or more and 3.00 mass% or less with respect to the total amount of the electrolyte solution.

The other additive may be a gelling agent or a crosslinked polymer. The electrolyte solution for a nonaqueous sodium ion battery according to the present embodiment can also be pseudo-solidified with the gelling agent or the crosslinked polymer, and the pseudo-solidified one is suitable, for example, for a sodium polymer battery.

[Nonaqueous Sodium Ion Battery]

Next, a configuration of the nonaqueous sodium ion battery according to one embodiment of the present invention will be described.

The nonaqueous sodium ion battery includes at least a positive electrode, a negative electrode, and the electrolyte solution for a nonaqueous sodium ion battery according to the present embodiment.

The nonaqueous sodium ion battery according to the present embodiment is characterized in that the electrolyte solution for a nonaqueous sodium ion battery according to the present embodiment is used, and for the other components, the nonaqueous sodium ion battery uses usual members to be used in a general nonaqueous sodium ion battery. That is, the other components include a positive electrode and a negative electrode capable of occluding and discharging sodium, a current collector, a separator, an exterior body, and the like.

[Positive Electrode]

A positive electrode material (positive electrode active material) is not limited, but examples thereof include sodium-containing transition metal composite oxides such as $NaCrO_2$, $NaFe_{0.5}Co_{0.5}O_2$, $NaFe_{0.4}Mn_{0.3}Ni_{0.3}O_2$, $NaNi_{0.5}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$, $Na_{2/3}Ni_{1/3}Ti_{1/6}Mn_{1/2}O_2$, and $Na_{2/3}Ni_{1/3}Mn_{2/3}O_2$, these sodium-containing transition metal composite oxides in which a plurality of transition metals such as Co, Mn, and Ni are mixed, sodium-containing transition metal composite oxides in which a part of the transition metals of these sodium-containing transition metal composite oxides is replaced with other metals other than the transition metals, polyanion type compounds such as $NaFePO_4$, $NaVPO_4F$, $Na_3V_2(PO_4)_3$, and $Na_2Fe_2(SO_4)_3$, sodium salts of a Prussian Blue analogues represented by a composition formula $Na_aM_b[Fe(CN)_6]_c$ (M = Cr, Mn, Fe, Co, Ni, Cu, or Zn, $0 \leq a \leq 2$, $0.5 \leq b \leq 1.5$, $0.5 \leq c \leq 1.5$), oxides such as $TiO_2$, $V_2O_5$, and $MoO_3$, sulfides such as $TiS_2$ and $FeS$, conductive polymers such as polyacetylene, polyparaphenylene, polyaniline, and polypyrrole, activated carbon, radical-generating polymers, and carbon materials.

In the positive electrode, for example, a positive electrode active material layer is formed on at least one surface of a positive electrode current collector. The positive electrode active material layer includes, for example, the positive electrode active material described above, a binder, and, if necessary, an electrically conductive agent. Examples of the binder include polytetrafluoroethylene, polyvinylidene fluoride, and a styrene-butadiene rubber (SBR) resin. As the electrically conductive agent, for example, carbon materials such as acetylene black, Ketjen black, carbon fiber, or graphite (granular graphite or flake graphite) can be used, and acetylene black or Ketjen black having low crystallinity is preferably used.

[Negative Electrode]

A negative electrode material (negative electrode active material) is not limited, but examples thereof include sodium metal and materials capable of occluding and discharging sodium ions. For example, sodium metal, an alloy of sodium metal and other metals such as tin, an intermetallic compound, various carbon materials such as hard carbon, a metal oxide such as titanium oxide, a metal nitride, (elemental) tin, a tin compound, activated carbon, a conductive polymer, and the like are used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like are used. One type of these negative electrode active materials may be used alone, or two or more types thereof may be used in combination.

In the negative electrode, for example, a negative electrode active material layer is formed on at least one surface of a negative electrode current collector. The negative electrode active material layer includes, for example, the negative electrode active material described above, a binder, and, if necessary, an electrically conductive agent. Examples of the binder include polytetrafluoroethylene, polyvinylidene fluoride, and a styrene-butadiene rubber (SBR) resin. As the electrically conductive agent, for example, carbon materials such as acetylene black, Ketjen black, carbon fiber, or graphite (granular graphite or flake graphite) can be used.

[Current Collector]

For the current collectors of the positive electrode and the negative electrode, copper, aluminum, stainless steel, nickel, titanium, alloys thereof, or the like can be used. An active material layer is formed on at least one surface of the current collector.

[Separator]

As the separator for preventing contact between the positive electrode and the negative electrode, a nonwoven fabric, a porous sheet, or a film made of polyolefin (for example, polypropylene and polyethylene), paper, glass fiber, or the like is used. These are preferably microporous so that the electrolyte solution permeates and ions easily permeate.

[Exterior Body]

As the exterior body, for example, a metal can having a coin shape, a cylindrical shape, a square shape, or the like, or a laminated exterior body can be used. Metal can materials include, for example, nickel-plated steel plates, stainless steel plates, nickel-plated stainless steel plates, aluminum or alloys thereof, nickel, and titanium. As the laminated exterior body, for example, an aluminum laminated film, a SUS laminated film, a silica-coated polypropylene or polyethylene laminated film, or the like can be used.

The configuration of the nonaqueous sodium ion battery according to the present embodiment is not limited, but for example, can be a configuration in which an electrode element including the positive electrode and the negative electrode arranged to face each other and a nonaqueous electrolyte solution can be included in the exterior body. Further, a shape of the nonaqueous sodium ion battery according to the present embodiment is not limited, but may have a coin shape, a cylindrical shape, a square shape, or an aluminum laminate sheet shape.

[Method for Producing Nonaqueous Sodium Ion Battery]

The present invention also relates to a method for producing the nonaqueous sodium ion battery.

The production method is a method for producing the nonaqueous sodium ion battery, and includes:

preparing an electrolyte solution for a nonaqueous sodium ion battery according to the present embodiment; and filling an empty cell including at least a positive electrode and a negative electrode with the electrolyte solution for a nonaqueous sodium ion battery.

[Examples]

Hereinafter, the present invention will be specifically described with reference to Examples, but the present invention is not limited to these Examples.

[Preparation of Electrolyte Solutions]

(Preparation of Electrolyte Solution No. 1-1)

Propylene carbonate (also referred to as "PC") was used as the (I) nonaqueous solvent, and in the solvent, $NaPF_6$ as the (II) sodium salt and sodium fluorosulfate as the (III) fluorosulfate were respectively dissolved in amounts shown in Table 1 with respect to the total amount of an electrolyte solution to prepare an electrolyte solution No. 1-1. The above preparation was performed with the liquid temperature maintained at 20°C to 30°C.

[Table 1]

Table 1

| Composition of Electrolyte Solution | | | | | |
|---|---|---|---|---|---|
| Electrolyte Solution No. | (III) Fluorosulfate | | (I) Nonaqueous solvent | (II) Sodium salt | |
| | Type | Content [mass%] | | Type | Content [mol/L] |
| Electrolyte Solution No. 1-1 | $NaSO_3F$ | 0.2 | PC | $NaPF_6$ | 1.0 |
| Electrolyte Solution No. 1-2 | | 0.3 | | | |
| Electrolyte Solution No. 1-3 | | 0.5 | | | |
| Electrolyte Solution No. 1-4 | | 1.0 | | | |
| Electrolyte Solution No. 1-5 | | 2.0 | | | |
| Electrolyte Solution No. 1-6 | | 5.0 | | | |
| Electrolyte Solution No. 1-7 | | 6.0 | | | |
| Electrolyte Solution No. 1-8 | | 7.0 | | | |
| Electrolyte Solution No. 1-9 | $LiSO_3F$ | 0.5 | | | 1.2 |
| Electrolyte Solution No. 1-10 | $TEA\ SO_3F$ | 0.5 | | | 1.2 |
| Electrolyte Solution No. 1-11 | None | - | | | |
| Electrolyte Solution No. 1-12 | $NaSO_3F$ | 0.5 | DG | | 1.0 |
| Electrolyte Solution No. 1-13 | | 1.0 | | | |
| Electrolyte Solution No. 1-14 | | 5.0 | | | 0.5 |
| Electrolyte Solution No. 1-15 | None | - | | | 1.0 |

(Preparation of Electrolyte Solutions Nos. 1-2 to 1-15)

As shown in Table 1, various electrolyte solutions were prepared in the same manner as in the electrolyte solution No. 1-1 except that a type and a content of the fluorosulfate were changed, diethylene glycol dimethyl ether (also referred to as "DG") was used as the nonaqueous solvent, and the content of $NaPF_6$ was changed.

[Examples 1-1 to 1-10 and Comparative Example 1-1]

A high-temperature cycle test was performed on each test cell prepared with an electrolyte solution shown in Table 2 as a test electrolyte solution, $NaNi_{0.5}Ti_{0.3}Mn_{0.2}O_2$ as a positive electrode material, and hard carbon (Carbotron P, manufactured by KUREHA CORPORATION) as a negative electrode material, and a cycle characteristic and a gas generation amount during a cycle test were evaluated. Evaluation results are shown in Table 2. The test cell was prepared as follows.

A test positive electrode was prepared by the following procedure.

A slurry solution was prepared by mixing 90 mass% of $NaNi_{0.5}Ti_{0.3}Mn_{0.2}O_2$ as the positive electrode active material, 5 mass% of acetylene black as the electrically conductive agent, and 5 mass% of polyvinylidene fluoride (PVDF) as the binder, and further adding N-methylpyrrolidone as the solvent in an amount of 50 mass% with respect to a total mass of the positive electrode active material, the electrically conductive agent, and the binder. The slurry solution was applied onto an aluminum foil as the positive electrode current collector and dried at 150°C for 12 hours to obtain the test positive electrode including a positive electrode active material layer formed on the current collector.

A test negative electrode was prepared by the following procedure.

A slurry solution was prepared by mixing 90 mass% of a hard carbon powder (Carbotron P manufactured by KUREHA CORPORATION) as the negative electrode active material and 10 mass% of polyvinylidene fluoride (PVDF) as the binder, and further adding N-methylpyrrolidone as the solvent in an amount of 50 mass% with respect to a total mass of the negative electrode active material and the binder. The slurry solution was applied onto an aluminum foil as the negative electrode current collector and dried at 150°C for 12 hours to obtain the test negative electrode including a negative electrode active material layer formed on the current collector.
The test positive electrode and the test negative electrode were placed via a polyethylene separator impregnated with the test electrolyte solution, and a test cell for 50 mAh having an aluminum laminate exterior was assembled.

[Evaluation of High-temperature Cycle Characteristic]

The test cell was charged and discharged at current density of 0.32 mA/cm$^2$ by a constant-current constant-voltage method at an environmental temperature of 25°C with an upper limit of the charge voltage of 4.1 V and a lower limit of the discharge voltage of 1.5 V, and then a charge and discharge test at an environmental temperature of 60°C was performed to evaluate the cycle characteristic. The cell was charged to 4.1 V and discharged to 1.5 V, and the charge-discharge cycle was repeated at current density of 1.56 mA/cm$^2$. Further, a degree of deterioration of the cell was evaluated with the discharge capacity maintenance rate at a 500th cycle in the charge and discharge test at the environmental temperature of 60°C. A "discharge capacity maintenance rate after a high-temperature cycle" represented by the discharge capacity maintenance rate at the 500th cycle was obtained by the following formula. A discharge capacity at a first cycle in the charge and discharge test at the environmental temperature of 60°C was defined as an initial discharge capacity.

$$\text{Discharge capacity maintenance rate after high-temperature cycle (\%)} = (\text{discharge capacity at 500th cycle/initial discharge capacity}) \times 100$$

[Evaluation of Gas Generation Amount]

Before and after the evaluation of the high-temperature cycle characteristic, a volume of the cell was measured by Archimedes method using silicone oil (silicone oil KF54, manufactured by Shin-Etsu Chemical Co., Ltd.), and a gas generation amount V (unit: cm$^3$) (gas generation amount V = volume V2 of cell after evaluation of high-temperature cycle characteristic - volume V1 of cell before evaluation of high-temperature cycle characteristic) was obtained. Based on the gas generation amount V, a "gas generation amount during the high-temperature cycle" was evaluated.

[Table 2]

Table 2

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 1-1 | Electrolyte Solution No. 1-1 | $NaNi_{0.5}Ti_{0.3}Mn_{0.2}O_2$ | Hard carbon | 105 | 54 |
| Example 1-2 | Electrolyte Solution No. 1-2 | | | 110 | 40 |
| Example 1-3 | Electrolyte Solution No. 1-3 | | | 115 | 29 |
| Example 1-4 | Electrolyte Solution No. 1-4 | | | 121 | 25 |
| Example 1-5 | Electrolyte Solution No. 1-5 | | | 123 | 22 |
| Example 1-6 | Electrolyte Solution No. 1-6 | | | 124 | 28 |
| Example 1-7 | Electrolyte Solution No. 1-7 | | | 117 | 32 |
| Example 1-8 | Electrolyte Solution No. 1-8 | | | 109 | 40 |
| Example 1-9 | Electrolyte Solution No. 1-9 | | | 108 | 62 |
| Example 1-10 | Electrolyte Solution No. 1-10 | | | 105 | 73 |
| Comparative Example 1-1 | Electrolyte Solution No. 1-11 | | | 100 | 100 |

In Table 2, evaluation results of Examples 1-1 to 1-10 are expressed with relative values with an evaluation result of Comparative Example 1-1 as 100%. A larger value for the "discharge capacity maintenance rate after a high-temperature cycle" is desirable, and a smaller value for the "gas generation amount during the high-temperature cycle" is desirable.

From the evaluation results in Table 2, it was found that the electrolyte solutions of Examples that satisfied the above solvent composition condition (the content of the chain carbonate is 0 mass% in each test example) and contain a predetermined amount of fluorosulfate could exert the effect of preventing the gas generation amount at the high temperature of 60°C or higher, and the test cells using the electrolyte solutions of Examples were also excellent in high-temperature cycle characteristic compared to that using the electrolyte solution containing no fluorosulfate of Comparative Example 1-1.

The reason why the high-temperature cycle characteristic was excellent is not clear, but it is presumed that the film on the electrode formed by the fluorosulfate anion and the solvent is in an optimum state, the electrode film is stable even at a high temperature, and an amount of Na ions taken into the electrode film during charging and discharging is reduced, and thus a cycle characteristic at a high temperature is also excellent.

Further, in Examples 1-2 to 1-8, it was found that the electrolyte solutions containing the predetermined amount of fluorosulfate could exhibit a more excellent effect of preventing the gas generation amount and a more excellent effect of improving the high-temperature cycle characteristic.

[Examples 1-11 to 1-13 and Comparative Example 1-2]

A test cell was prepared in the same manner as in Example 1-1, except that the electrolyte solution shown in Table 3 was used as the test electrolyte solution and $NaCrO_2$ (positive electrode active material) was used as the positive electrode material, and the cycle characteristic and the gas generation amount during the cycle test were evaluated in the same manner as in Example 1-1, except that the upper limit of the charge voltage in the evaluation of the high-temperature cycle characteristic was changed to 3.3V. The evaluation results are shown in Table 3.

[Table 3]

Table 3

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 1-11 | Electrolyte Solution No. 1-12 | $NaCrO_2$ | Hard carbon | 112 | 76 |
| Example 1-12 | Electrolyte Solution No. 1-13 | | | 118 | 65 |
| Example 1-13 | Electrolyte Solution No. 1-14 | | | 109 | 88 |
| Comparative Example 1-2 | Electrolyte Solution No. 1-15 | | | 100 | 100 |

In Table 3, evaluation results of Examples 1-11 to 1-13 are expressed with relative values with an evaluation result of Comparative Example 1-2 as 100%.

From the evaluation results in Table 3, it was found that as is the case in using PC as the (I) nonaqueous solvent, when DG was used as the nonaqueous solvent (the content of the chain carbonate was 0 mass% in each test example), the electrolyte solutions of Examples containing a predetermined amount of fluorosulfate could exhibit the effect of preventing the gas generation amount at the high temperature of 60°C or higher, and the test cells using the electrolyte solutions of Examples were also excellent in high-temperature cycle characteristic compared to that using the electrolyte solution containing no fluorosulfate of Comparative Example 1-2.

Further, from the evaluation results of Table 3, it was found that the electrolyte solutions containing the predetermined amount of fluorosulfate could exhibit a more excellent effect of preventing the gas generation amount and a more excellent effect of improving the high-temperature cycle characteristic.

[Preparation of Electrolyte Solutions Containing Chain Carbonate Solvent]

(Preparation of Electrolyte Solutions Nos. 2-1 to 2-6, Nos. 3-1 to 3-6, Nos. 4-1 to 4-6, Nos. 5-1 to 5-6, Nos. 6-1 to 6-6, Nos. 7-1 to 7-6, and Nos. 8-1 to 8-6)

As shown in Table 4, PC and dimethyl carbonate (also referred to as "DMC") were used as (I) nonaqueous solvents at mass ratios shown in Table 4, and $NaPF_6$ as the (II) sodium salt and sodium fluorosulfate as the (III) fluorosulfate were respectively dissolved in amounts shown in Table 4 with respect to the total amount of an electrolyte solution to prepare various electrolyte solutions.

[Table 4]

Table 4

| Composition of Electrolyte solution | | | | | |
|---|---|---|---|---|---|
| Electrolyte Solution No. | (III) Fluorosulfate | | (I) Nonaqueous solvent | (II) Sodium salt | |
| | Type | Content [mass%] | | Type | Content [mol/L] |
| Electrolyte Solution No. 2-1 | None | - | PC = 100 (mass ratio) | NaPF$_6$ | 1.1 |
| Electrolyte Solution No. 2-2 | NaSO$_3$F | 0.2 | | | |
| Electrolyte Solution No. 2-3 | | 0.3 | | | |
| Electrolyte Solution No. 2-4 | | 0.5 | | | |
| Electrolyte Solution No. 2-5 | | 1.0 | | | |
| Electrolyte Solution No. 2-6 | | 2.0 | | | |
| Electrolyte Solution No. 3-1 | None | - | PC:DMC = 80:20 (mass ratio) | | |
| Electrolyte Solution No. 3-2 | NaSO$_3$F | 0.2 | | | |
| Electrolyte Solution No. 3-3 | | 0.3 | | | |
| Electrolyte Solution No. 3-4 | | 0.5 | | | |
| Electrolyte Solution No. 3-5 | | 1.0 | | | |
| Electrolyte Solution No. 3-6 | | 2.0 | | | |
| Electrolyte Solution No. 4-1 | None | - | PC:DMC = 60:40 (mass ratio) | | |
| Electrolyte Solution No. 4-2 | NaSO$_3$F | 0.2 | | | |
| Electrolyte Solution No. 4-3 | | 0.3 | | | |
| Electrolyte Solution No. 4-4 | | 0.5 | | | |
| Electrolyte Solution No. 4-5 | | 1.0 | | | |
| Electrolyte Solution No. 4-6 | | 2.0 | | | |
| Electrolyte Solution No. 5-1 | None | - | PC:DMC = 50:50 (mass ratio) | | |
| Electrolyte Solution No. 5-2 | NaSO$_3$F | 0.2 | | | |
| Electrolyte Solution No. 5-3 | | 0.3 | | | |
| Electrolyte Solution No. 5-4 | | 0.5 | | | |
| Electrolyte Solution No. 5-5 | | 1.0 | | | |
| Electrolyte Solution No. 5-6 | | 2.0 | | | |
| Electrolyte Solution No. 6-1 | None | - | PC:DMC = 40:60 (mass ratio) | | |
| Electrolyte Solution No. 6-2 | NaSO$_3$F | 0.2 | | | |
| Electrolyte Solution No. 6-3 | | 0.3 | | | |
| Electrolyte Solution No. 6-4 | | 0.5 | | | |
| Electrolyte Solution No. 6-5 | | 1.0 | | | |
| Electrolyte Solution No. 6-6 | | 2.0 | | | |
| Electrolyte Solution No. 7-1 | None | - | PC:DMC = 20:80 (mass ratio) | | |
| Electrolyte Solution No. 7-2 | NaSO$_3$F | 0.2 | | | |
| Electrolyte Solution No. 7-3 | | 0.3 | | | |
| Electrolyte Solution No. 7-4 | | 0.5 | | | |
| Electrolyte Solution No. 7-5 | | 1.0 | | | |
| Electrolyte Solution No. 7-6 | | 2.0 | | | |
| Electrolyte Solution No. 8-1 | None | - | PC:DMC = 0:100 (mass ratio) | | |
| Electrolyte Solution No. 8-2 | NaSO$_3$F | 0.2 | | | |
| Electrolyte Solution No. 8-3 | | 0.3 | | | |
| Electrolyte Solution No. 8-4 | | 0.5 | | | |
| Electrolyte Solution No. 8-5 | | 1.0 | | | |
| Electrolyte Solution No. 8-6 | | 2.0 | | | |

[Examples 2-1 to 2-5, Comparative Example 2-1, Examples 3-1 to 3-5, Comparative Example 3-1, Examples 4-1 to 4-5, Comparative Example 4-1, Examples 5-1 to 5-5, Comparative Example 5-1, Examples 6-1 to 6-5, Comparative Example 6-1, Comparative Examples 7-1 to 7-6, and Comparative Examples 8-1 to 8-6]

Test cells were prepared in the same manner as in Example 1-1 except that electrolyte solutions shown in Table 5 were used as the test electrolyte solutions, and a cycle characteristic and a gas generation amount during a cycle test were evaluated in the same manner as in Example 1-1. Evaluation results are shown in Table 5.

[Table 5]

Table 5

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Comparative Example 2-1 | Electrolyte Solution No. 2-1 | | | 100 | 100 |
| Example 2-1 | Electrolyte Solution No. 2-2 | | | 105 | 55 |
| Example 2-2 | Electrolyte Solution No. 2-3 | | | 110 | 41 |
| Example 2-3 | Electrolyte Solution No. 2-4 | | | 120 | 28 |
| Example 2-4 | Electrolyte Solution No. 2-5 | | | 122 | 26 |
| Example 2-5 | Electrolyte Solution No. 2-6 | | | 123 | 23 |
| Comparative Example 3-1 | Electrolyte Solution No. 3-1 | | | 103 | 130 |
| Example 3-1 | Electrolyte Solution No. 3-2 | | | 109 | 51 |
| Example 3-2 | Electrolyte Solution No. 3-3 | | | 115 | 43 |
| Example 3-3 | Electrolyte Solution No. 3-4 | | | 121 | 33 |
| Example 3-4 | Electrolyte Solution No. 3-5 | | | 120 | 27 |

(continued)

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 3-5 | Electrolyte Solution No. 3-6 | | | 123 | 21 |
| Comparative Example 4-1 | Electrolyte Solution No. 4-1 | | | 102 | 160 |
| Example 4-1 | Electrolyte Solution No. 4-2 | | | 107 | 58 |
| Example 4-2 | Electrolyte Solution No. 4-3 | | | 114 | 47 |
| Example 4-3 | Electrolyte Solution No. 4-4 | | | 121 | 37 |
| Example 4-4 | Electrolyte Solution No. 4-5 | | | 122 | 30 |
| Example 4-5 | Electrolyte Solution No. 4-6 | | | 122 | 23 |
| Comparative Example 5-1 | Electrolyte Solution No. 5-1 | | | 101 | 175 |
| Example 5-1 | Electrolyte Solution No. 5-2 | | | 106 | 61 |
| Example 5-2 | Electrolyte Solution No. 5-3 | $NaNi_{0.5}Ti_{0.3}Mn_{0.2}O_2$ | Hard carbon | 112 | 52 |
| Example 5-3 | Electrolyte Solution No. 5-4 | | | 120 | 42 |
| Example 5-4 | Electrolyte Solution No. 5-5 | | | 119 | 33 |
| Example 5-5 | Electrolyte Solution No. 5-6 | | | 120 | 26 |
| Comparative Example 6-1 | Electrolyte Solution No. 6-1 | | | 100 | 190 |

(continued)

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 6-1 | Electrolyte Solution No. 6-2 | | | 105 | 65 |
| Example 6-2 | Electrolyte Solution No. 6-3 | | | 112 | 62 |
| Example 6-3 | Electrolyte Solution No. 6-4 | | | 121 | 53 |
| Example 6-4 | Electrolyte Solution No. 6-5 | | | 118 | 45 |
| Example 6-5 | Electrolyte Solution No. 6-6 | | | 117 | 29 |
| Comparative Example 7-1 | Electrolyte Solution No. 7-1 | | | 100 | 220 |
| Comparative Example 7-2 | Electrolyte Solution No. 7-2 | | | 104 | 158 |
| Comparative Example 7-3 | Electrolyte Solution No. 7-3 | | | 110 | 149 |
| Comparative Example 7-4 | Electrolyte Solution No. 7-4 | | | 116 | 136 |
| Comparative Example 7-5 | Electrolyte Solution No. 7-5 | | | 115 | 129 |
| Comparative Example 7-6 | Electrolyte Solution No. 7-6 | | | 117 | 118 |
| Comparative Example 8-1 | Electrolyte Solution No. 8-1 | | | 99 | 250 |
| Comparative Example 8-2 | Electrolyte Solution No. 8-2 | | | 105 | 220 |
| Comparative Example 8-3 | Electrolyte Solution No. 8-3 | | | 108 | 213 |

(continued)

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Comparative Example 8-4 | Electrolyte Solution No. 8-4 | | | 115 | 206 |
| Comparative Example 8-5 | Electrolyte Solution No. 8-5 | | | 114 | 205 |
| Comparative Example 8-6 | Electrolyte Solution No. 8-6 | | | 113 | 202 |

The evaluation results of Examples and Comparative Examples shown in Table 5 are expressed with relative values with an evaluation result of Comparative Example 2-1 as 100%.

From the evaluation results in Table 5, it was found that, even when the (I) nonaqueous solvent contained a chain carbonate, as long as the solvent composition condition described above was satisfied, the electrolyte solutions of Examples containing a predetermined amount of fluorosulfate could exhibit the effect of preventing the gas generation amount at the high temperature of 60°C or higher and the test cells using the electrolyte solutions of Examples were also excellent in high-temperature cycle characteristic compared to those using electrolyte solutions of Comparative Examples containing no fluorosulfate in respective solvents systems.

It was found that in Comparative Examples 7-1 to 7-6 (a content of the chain carbonate is 80 mass%) and Comparative Examples 8-1 to 8-6 (a content of the chain carbonate is 100 mass%), which did not satisfy the solvent composition condition, gas generation at the high temperature could not be prevented regardless of the content of the fluorosulfate.

Further, from the evaluation results of Table 5, it was found that the electrolyte solutions containing the predetermined amount of fluorosulfate could exhibit a more excellent effect of preventing the gas generation amount and a more excellent effect of improving the high-temperature cycle characteristic.

[Dependency of Gas Generation Amount on Chain Carbonate Amount]

With respect to Examples and Comparative Examples described in Table 5, the FIGURE shows a plot of a gas generation amount during a high-temperature cycle (relative value when Comparative Example 2-1 is taken as 100%) with respect to the content of the chain carbonate in (I). From the plot, it was found that the effect of preventing the gas generation amount at the high temperature of 60°C or higher could be remarkably exhibited in electrolyte solutions satisfying the solvent composition condition described above. It was also found that this tendency was maintained by the (III) fluorosulfate in a predetermined range of the content, which is defined in the present disclosure.

(Preparation of Electrolyte Solutions Nos. 1-9 to 9-6)

As shown in Table 6, a mixed solvent obtained by mixing ethylene carbonate (hereinafter, also referred to as "EC"), ethyl methyl carbonate (hereinafter, also referred to as "EMC"), and diethyl carbonate (hereinafter, also referred to as "DEC") in a mass ratio of EC:EMC:DEC = 40:30:30 was used as the (I) nonaqueous solvent, and $NaPF_6$ as the (II) sodium salt and sodium fluorosulfate as the (III) fluorosulfate were respectively dissolved in amounts shown in Table 6 with respect to the total amount of an electrolyte solution to prepare various electrolyte solutions. The above preparation was performed with the liquid temperature maintained at 20°C to 30°C.

[Table 6]

Table 6

| Electrolyte Solution No. | (III) Fluorosulfate | | (I) Nonaqueous solvent | (II) Sodium salt | |
|---|---|---|---|---|---|
| | Type | Content [mass%] | | Type | Content [mol/L] |
| Electrolyte Solution No. 9-1 | None | - | EC:EMC:DEC = 40:30:30 (mass ratio) | NaPF$_6$ | 1.0 |
| Electrolyte Solution No. 9-2 | NaSO$_3$F | 0.2 | | | |
| Electrolyte Solution No. 9-3 | | 0.3 | | | |
| Electrolyte Solution No. 9-4 | | 0.5 | | | |
| Electrolyte Solution No. 9-5 | | 1.0 | | | |
| Electrolyte Solution No. 9-6 | | 2.0 | | | |

[Examples 9-1 to 9-5 and Comparative Example 9-1]

Test cells were prepared in the same manner as in Example 1-1 except that electrolyte solutions shown in Table 7 were used as the test electrolyte solutions, and a cycle characteristic and a gas generation amount during a cycle test were evaluated in the same manner as in Example 1-1. Evaluation results are shown in Table 7.

[Table 7]

Table 7

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Comparative Example 9-1 | Electrolyte Solution No. 9-1 | $NaNi_{0.5}Ti_{0.3}Mn_{0.2}O_2$ | Hard carbon | 100 | 100 |
| Example 9-1 | Electrolyte Solution No. 9-2 | | | 106 | 60 |
| Example 9-2 | Electrolyte Solution No. 9-3 | | | 111 | 42 |
| Example 9-3 | Electrolyte Solution No. 9-4 | | | 119 | 27 |
| Example 9-4 | Electrolyte Solution No. 9-5 | | | 121 | 21 |
| Example 9-5 | Electrolyte Solution No. 9-6 | | | 122 | 22 |

In Table 7, evaluation results of Examples 9-1 to 9-5 are expressed with relative values with an evaluation result of Comparative Example 9-1 as 100%.

From the evaluation results in Table 7, it was found that, even when the electrolyte solutions contained an asymmetric chain carbonate in the (I) nonaqueous solvent (a total content of the chain carbonate was 60 mass% in each test example), the electrolyte solutions of Examples containing a predetermined amount of fluorosulfate could exhibit the effect of preventing the gas generation amount at the high temperature of 60°C or higher, and the test cells using the electrolyte solutions of Examples were also excellent in high-temperature cycle characteristic compared to that using the electrolyte solution containing no fluorosulfate of Comparative Example 9-1.

Further, in Examples 9-2 to 9-5, it was found that the electrolyte solutions containing the predetermined amount of fluorosulfatecould exhibit a more excellent effect of preventing the gas generation amount and a more excellent effect of improving the high-temperature cycle characteristic.

[Preparation of Electrolyte Solutions Containing Other Additives]

(Preparation of Electrolyte Solutions Nos. 10-1 to 10-8 and Electrolyte Solutions Nos. 11-1 to 11-8)

A mixed solvent obtained by mixing PC, EC, and EMC in a mass ratio of PC:EC:EMC = 30:20:50 was used as the (I) nonaqueous solvent, and $NaPF_6$ as the (II) sodium salt and sodium fluorosulfate as the (III) fluorosulfate, and $NaPF_4(C_2O_4)$ as another additive were respectively dissolved in amounts shown in Table 8 with respect to the total amount of an electrolyte solution to prepare an electrolyte solution No. 10-1. The above preparation was performed with the liquid temperature maintained at 20°C to 30°C.

Further, various electrolyte solutions shown in Table 8 were prepared in the same manner as in the electrolyte solution No. 10-1 except that the kind and content of the other additive was changed to those shown in Table 8 and the content of the fluorosulfate was changed. Abbreviations in Table 8 are as follows.

VC: vinylene carbonate
FEC: fluoroethylene carbonate
TMSB: tris(trimethylsilyl)borate

DTD: 1,3,2-dioxathiolane-2,2-dioxide

[Table 8]

Table 8

| Composition of Electrolyte Solution | | | | | | | |
|---|---|---|---|---|---|---|---|
| Electrolyte Solution No. | (III) Fluorosulfate | | Other additives | | (I) Nonaqueous solvent | (II) Sodium salt | |
| | Type | Content [mass%] | Type | Content [mass%] | | Type | Content [mol/L] |
| Electrolyte Solution No. 10-0 | NaSO$_3$F | 2.0 | None | - | PC:EC:EMC = 30: 20:50 (mass ratio) | NaPF$_6$ | 1.0 |
| Electrolyte Solution No. 10-1 | | | NaPF$_4$ (C$_2$O$_4$) | 1.0 | | | |
| Electrolyte Solution No. 10-2 | | | NaPF$_2$ (C$_2$O$_4$)$_2$ | 1.0 | | | |
| Electrolyte Solution No. 10-3 | | | NaPO$_2$F$_2$ | 0.5 | | | |
| Electrolyte Solution No. 10-4 | | | NaBF$_2$ (C$_2$O$_4$) | 1.0 | | | |
| Electrolyte Solution No. 10-5 | | | VC | 1.0 | | | |
| Electrolyte Solution No. 10-6 | | | FEC | 1.0 | | | |
| Electrolyte Solution No. 10-7 | | | TMSB | 1.0 | | | |
| Electrolyte Solution No. 10-8 | | | DTD | 0.5 | | | |

(continued)

| Composition of Electrolyte Solution | | | | | | | |
|---|---|---|---|---|---|---|---|
| Electrolyte Solution No. | (III) Fluorosulfate | | Other additives | | (I) Nonaqueous solvent | (II) Sodium salt | |
| | Type | Content [mass%] | Type | Content [mass%] | | Type | Content [mol/L] |
| Electrolyte Solution No. 11-1 | None | - | $NaPF_4(C_2O_4)$ | 1.0 | | | |
| Electrolyte Solution No. 11-2 | | | $NaPF_2(C_2O_4)_2$ | 1.0 | | | |
| Electrolyte Solution No. 11-3 | | | $NaPO_2F_2$ | 0.5 | | | |
| Electrolyte Solution No. 11-4 | | | $NaBF_2(C_2O_4)$ | 1.0 | | | |
| Electrolyte Solution No. 11-5 | | | VC | 1.0 | | | |
| Electrolyte Solution No. 11-6 | | | FEC | 1.0 | | | |
| Electrolyte Solution No. 11-7 | | | TMSB | 1.0 | | | |
| Electrolyte Solution No. 11-8 | | | DTD | 0.5 | | | |

[Examples 10-1 to 10-8 and Comparative Examples 10-1 to 10-8]

Test cells were prepared in the same manner as in Example 1-1 except that electrolyte solutions shown in Table 9 were used as the test electrolyte solutions, and a cycle characteristic and a gas generation amount during a cycle test were evaluated in the same manner as in Example 1-1. Evaluation results are shown in Table 9.

[Table 9]

Table 9

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 10-1 | Electrolyte Solution No. 10-1 | | | 117 | 36 |

(continued)

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Comparative Example 10-1 | Electrolyte Solution No. 11-1 | $NaNi_{0.5}Ti_{0.3}Mn_{0.2}O_2$ | Hard carbon | 100 | 100 |
| Example 10-2 | Electrolyte Solution No. 10-2 | | | 111 | 21 |
| Comparative Example 10-2 | Electrolyte Solution No. 11-2 | | | 100 | 100 |
| Example 10-3 | Electrolyte Solution No. 10-3 | | | 130 | 29 |
| Comparative Example 10-3 | Electrolyte Solution No. 11-3 | | | 100 | 100 |
| Example 10-4 | Electrolyte Solution No. 10-4 | | | 121 | 35 |
| Comparative Example 10-4 | Electrolyte Solution No. 11-4 | | | 100 | 100 |
| Example 10-5 | Electrolyte Solution No. 10-5 | | | 131 | 27 |
| Comparative Example 10-5 | Electrolyte Solution No. 11-5 | | | 100 | 100 |
| Example 10-6 | Electrolyte Solution No. 10-6 | | | 118 | 17 |
| Comparative Example 10-6 | Electrolyte Solution No. 11-6 | | | 100 | 100 |
| Example 10-7 | Electrolyte Solution No. 10-7 | | | 123 | 37 |
| Comparative Example 10-7 | Electrolyte Solution No. 11-7 | | | 100 | 100 |
| Example 10-8 | Electrolyte Solution No. 10-8 | | | 117 | 33 |

(continued)

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Comparative Example 10-8 | Electrolyte Solution No. 11-8 | | | 100 | 100 |

In Table 9, evaluation results of Examples 10-1 to 10-8 are expressed with relative values with evaluation results of Comparative Examples 10-1 to 10-8 as 100%.

From the evaluation results of Table 9, it was found that even the composition of the electrolyte solution further included another additive, the electrolyte solutions of Examples that satisfied the above solvent composition condition (the content of the chain carbonate is 50 mass% in each test example) and contained a predetermined amount of fluorosulfate could exert the effect of preventing the gas generation amount at the high temperature of 60°C or higher, and the test cells using the electrolyte solutions of Examples were also excellent in high-temperature cycle characteristic compared to those using the electrolyte solutions containing no fluorosulfate of Comparative Examples respectively corresponding to Examples.

Table 10 shows evaluation results of Examples 10-1 to 10-8. Test cells were prepared in the same manner as in Example 1-1 except that the electrolyte solution No. 10-0 in Table 8 was used as a nonaqueous electrolyte solution, and the performance evaluation was performed in the same manner as in Example 1-1 and the evaluation results were expressed as relative values with an evaluation result of Example 10-0 as 100%.

[Table 10]

Table 10

| Test example | Electrolyte Solution No. | Positive electrode active material | Negative electrode active material | Evaluation result | |
|---|---|---|---|---|---|
| | | | | Discharge capacity maintenance rate after high-temperature cycle [%] | Gas generation amount during high-temperature cycle [%] |
| Example 10-0 | Electrolyte Solution No. 10-0 | $NaNi_{0.5}Ti_{0.3}Mn_{0.2}O_2$ | Hard carbon | 100 | 100 |
| Example 10-1 | Electrolyte Solution No. 10-1 | | | 105 | 92 |
| Example 10-2 | Electrolyte Solution No. 10-2 | | | 107 | 99 |
| Example 10-3 | Electrolyte Solution No. 10-3 | | | 103 | 90 |
| Example 10-4 | Electrolyte Solution No. 10-4 | | | 104 | 96 |
| Example 10-5 | Electrolyte Solution No. 10-5 | | | 103 | 99 |
| Example 10-6 | Electrolyte Solution No. 10-6 | | | 105 | 105 |
| Example 10-7 | Electrolyte Solution No. 10-7 | | | 103 | 98 |
| Example 10-8 | Electrolyte Solution No. 10-8 | | | 104 | 94 |

From the evaluation results in Table 10, it was found that the effect of preventing the gas generation amount and/or the effect of improving the high-temperature cycle characteristic could be further improved and exhibited by the electrolyte solution composition further containing the other additive.

INDUSTRIAL APPLICABILITY

An embodiment of the present disclosure allows for providing an electrolyte solution for a nonaqueous sodium ion battery excellent in an effect of preventing gas generation at a high temperature of 60°C or higher when the electrolyte solution is used in the nonaqueous sodium ion battery, a nonaqueous sodium ion battery using the same, and a method for producing the same.

Although the present disclosure has been described in detail and with reference to specific examples, it will be apparent to those skilled in the art that various changes and modifications can be made without departing from the spirit and scope of the present disclosure.

The present application is based on a Japanese Patent Application No. 2021-082005 filed on May 13, 2021, the contents of which are incorporated herein by reference.

**Claims**

1. An electrolyte solution for a nonaqueous sodium ion battery, comprising:

    (I) a nonaqueous solvent;
    (II) a sodium salt; and
    (III) a fluorosulfate, wherein
    the electrolyte solution comprises the (III) in an amount of 0.05 mass% to 10.00 mass% with respect to the total amount of the electrolyte solution for a nonaqueous sodium ion battery, and
    the electrolyte solution comprises a chain carbonate in an amount of 0 mass% to 70 mass% with respect to the total amount of the (I).

2. The electrolyte solution for a nonaqueous sodium ion battery according to claim 1, wherein the electrolyte solution comprises the (III) in an amount of 0.15 mass% to 8.00 mass% with respect to the total amount of the electrolyte solution for a nonaqueous sodium ion battery.

3. The electrolyte solution for a nonaqueous sodium ion battery according to claim 1, wherein the electrolyte solution comprises a chain carbonate in an amount of 0 mass% to 65 mass% with respect to the total amount of the (I).

4. The electrolyte solution for a nonaqueous sodium ion battery according to claim 1, wherein the electrolyte solution comprises a chain carbonate in an amount of 0 mass% to 62 mass% with respect to the total amount of the (I).

5. The electrolyte solution for a nonaqueous sodium ion battery according to claim 1, wherein a counter cation of the (III) is a lithium ion, a sodium ion, a potassium ion, a tetraalkylammonium ion, a tetraalkylphosphonium ion, or an ammonium ion having a spiro skeleton.

6. The electrolyte solution for a nonaqueous sodium ion battery according to claim 1, wherein the (I) comprises at least one selected from the group consisting of a cyclic ester, a chain ester other than the chain carbonate, a cyclic ether, and a chain ether.

7. The electrolyte solution for a nonaqueous sodium ion battery according to claim 6, wherein the (I) comprises the cyclic ester and the cyclic ester is a cyclic carbonate.

8. The electrolyte solution for a nonaqueous sodium ion battery according to claim 6, wherein the (I) comprises at least one selected from the group consisting of ethylene carbonate, propylene carbonate, butylene carbonate, $\gamma$-butyro-lactone, methyl acetate, ethyl acetate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.

9. The electrolyte solution for a nonaqueous sodium ion battery according to any one of claims 1 to 8, wherein the chain carbonate is at least one selected from the group consisting of dimethyl carbonate, diethyl carbonate, ethyl methyl carbonate, methyl propyl carbonate, methyl-2,2,2-trifluoroethyl carbonate, ethyl-2,2,2-trifluoroethyl carbonate, methyl-1,1,1,3,3,3-hexafluoroisopropyl carbonate, and ethyl-1,1,1,3,3,3-hexafluoroisopropyl carbonate.

10. The electrolyte solution for a nonaqueous sodium ion battery according to any one of claims 1 to 8, wherein the (II) is at least one selected from the group consisting of $NaPF_6$, $NaBF_4$, $NaBF_2(C_2O_4)$, $NaPF_4(C_2O_4)$, $NaPF_2(C_2O_4)_2$, $NaSbF_6$, $NaAsF_6$, $NaClO_4$, $NaN(SO_2F)_2$, $NaN(SO_2CF_3)_2$, $NaN(SO_2F)(SO_2CF_3)$, $NaN(C_aF_{2a+1}SO_2)(C_bF_{2b+1}SO_2)$, where a and b are integers satisfying $2 \leq a < 20$ and $2 < b \leq 20$, $NaSO_3CF_3$, $NaSO_3C_4F_9$, $NaN(POF_2)_2$, $NaN(POF_2)(SO_2F)$, $NaPO_2F_2$, $NaC(SO_2CF_3)_3$, $NaPF_3(C_3F_7)_3$, $NaB(CF_3)_4$, $NaBF_3(C_2F_5)$, $NaAlO_2$, $NaAlCl_4$, $NaCl$, and $NaI$.

11. The electrolyte solution for a nonaqueous sodium ion battery according to any one of claims 1 to 8, wherein the (II) comprises $NaPF_6$.

12. A nonaqueous sodium ion battery, comprising:
    at least a positive electrode, a negative electrode, and the electrolyte solution for a nonaqueous sodium ion battery according to any one of claims 1 to 8.

13. A method for producing a nonaqueous sodium ion battery, comprising:

preparing the electrolyte solution for a nonaqueous sodium ion battery according to any one of claims 1 to 8, and filling an empty cell comprising at least a positive electrode and a negative electrode with the electrolyte solution for a nonaqueous sodium ion battery.

**FIGURE**

## INTERNATIONAL SEARCH REPORT

| International application No. |
|---|
| **PCT/JP2022/019973** |

**A. CLASSIFICATION OF SUBJECT MATTER**

*H01M 10/0567*(2010.01)i; *H01M 10/054*(2010.01)i; *H01M 10/0568*(2010.01)i; *H01M 10/0569*(2010.01)i; *H01M 10/058*(2010.01)i

FI: H01M10/0567; H01M10/054; H01M10/0568; H01M10/0569; H01M10/058

According to International Patent Classification (IPC) or to both national classification and IPC

**B. FIELDS SEARCHED**

Minimum documentation searched (classification system followed by classification symbols)

H01M10/0567; H01M10/054; H01M10/0568; H01M10/0569; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-46614 A (MITSUBISHI CHEMICAL CORP.) 22 March 2019 (2019-03-22) paragraphs [0020]-[0047] | 1-13 |
| X | WO 2020/175638 A1 (MITSUBISHI CHEMICAL CORP.) 03 September 2020 (2020-09-03) paragraphs [0025]-[0050] | 1-13 |
| A | JP 2019-53984 A (CENTRAL GLASS CO., LTD.) 04 April 2019 (2019-04-04) | 1-13 |
| A | JP 2020-87690 A (CENTRAL GLASS CO., LTD.) 04 June 2020 (2020-06-04) | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/019973**

| Patent document cited in search report | Publication date (day/month/year) | Patent family member(s) | Publication date (day/month/year) |
|---|---|---|---|
| JP 2019-46614 A | 22 March 2019 | (Family: none) | |
| WO 2020/175638 A1 | 03 September 2020 | US 2021/0391600 A1 paragraphs [0032]-[0057] EP 3933997 A1 CN 113474931 A | |
| JP 2019-53984 A | 04 April 2019 | US 2020/0287241 A1 WO 2019/054418 A1 EP 3678250 A1 CN 111066193 A KR 10-2020-0053565 A | |
| JP 2020-87690 A | 04 June 2020 | US 2020/0335823 A1 WO 2019/117101 A1 EP 3726636 A1 KR 10-2020-0090223 A CN 111527636 A | |

Form PCT/ISA/210 (patent family annex) (January 2015)

**EP 4 340 093 A1**

**REFERENCES CITED IN THE DESCRIPTION**

**Patent documents cited in the description**

- JP 2013048077 A
- JP 2016181467 A
- JP 2019046614 A
- WO 2018179884 A
- JP 2021082005 A